# EUROPÄISCHE PATENTSCHRIFT

(11) **EP 4 219 275 B1**
(45) Veröffentlichungstag und Bekanntmachung des Hinweises auf die Patenterteilung: **18.02.2026**
(21) Anmeldenummer: 22197813.3
(22) Anmeldetag: 26.09.2022
(51) Int. Cl.: B62D 33/06

(54) **KABINENLAGERUNGSSYSTEM UND KABINENLAGERUNG**
CABIN MOUNTING SYSTEM AND CABIN MOUNT
SYSTÈME DE MONTAGE DE CABINE ET MONTAGE DE CABINE

(30) Priorität: 31.01.2022 DE 102022102179
(43) Veröffentlichungstag der Anmeldung: 02.08.2023
(73) Patentinhaber: Deere & Company, Moline, IL 61265 (US)
(72) Erfinder: Hingne, Abhijit, Mannheim (DE); Flebbe, Thiemo, Mannheim (DE)
(74) Vertreter: Dehnhardt, Florian Christopher

(56) Entgegenhaltungen:
- EP-A2- 2 650 195
- DE-A1- 19 961 670

## Beschreibung

Die vorliegende Erfindung betrifft ein Kabinenlagerungssystem und eine Kabinenlagerung für Fahrzeuge, welche die Befestigung der Kabine eines Fahrzeugs auf oder an dem Chassis ermöglichen. Dokument DE19961670 A1 zeigt die Präambel des unabhängigen Anspruchs.

Fahrzeuge, speziell für den Offroadbereich, werden in anspruchsvollen Arbeitsumgebungen eingesetzt. Bei den Fahrzeugen kann es sich dabei um Baufahrzeuge, z.B. Raupenfahrzeuge, Fahrzeuge für Erdaushub, Forstfahrzeuge zum Verarbeiten von Nutzholz oder um landwirtschaftliche Fahrzeuge handeln.

Der Einsatzort ist meist unerschlossenes Gelände mit vorhandenen Steigungen. Gerade bei vorhandenem Gefälle und dem Einsatz auf Erdboden oder Geröll kann es zu einer starken Neigung des Fahrzeugs kommen, mit einem verbundenen Kippen oder Überschlagen des Fahrzeugs im Schadensfall. In dieser Situation ist die Bedienperson bestmöglich vor Verletzungen zu schützen, zum einem vor möglichen Kollisionen innerhalb der Kabine, zum anderen vor einem Herausschleudern aus der Kabine heraus. Zusätzlich ist es erforderlich, die Kabine derart am Fahrzeug zu halten, dass ein Losbrechen der Kabine bei einem Kippen des Fahrzeugs verhindert wird und eine Sicherheitszelle für die Bedienperson auch bei einem Überschlag des Fahrzeugs erhalten bleibt.

Aufgrund des Fahrzeugeinsatzes im freien Gelände und der damit verbundenen Arbeitsumgebung bleibt Schmutzeintrag am und im Fahrzeug nicht aus. Dadurch kommt es zu Verschmutzungen unterhalb der Fahrzeugkabine, so dass besonders bei beweglich gelagerten Kabinen der Federweg beeinträchtig werden kann. Zusätzlich kann der Schmutzeintrag zu Geräuschentwicklung führen, da vorhandene Spalten zwischen beweglichen Bauteilen der Kabinenlagerung mit Schmutzpartikeln verfüllt werden können. Es ist die Aufgabe der Erfindung, die angesprochenen Probleme zu vermeiden. Die Aufgabe wird gelöst durch die Erfindung gemäß dem Hauptanspruch. Weitere Ausbildungen der Erfindung ergeben sich aus den abhängigen Ansprüchen.

Die Erfindung betrifft eine Kabinenlagerung aufweisend eine Chassishalterung, aufweisend eine Chassisplatte mit einem mittleren Bereich, dazu ausgelegt, an einem Chassis eines Fahrzeugs befestigt zu werden, einem unteren Endbereich, dazu ausgelegt, ein Federungselement zu befestigen, einem oberen Endbereich mit einer Öffnung, ausgelegt zum Verbinden mit einer oberen Lagerplatte, eine Kabinenhalterung aufweisend eine Kabinenplatte, ausgelegt zum Befestigen an einer Fahrzeugkabine, eine an der Kabinenplatte befestigte obere Lagerplatte mit einer U-förmigen Struktur, ausgelegt um in der Öffnung der Chassisplatte beweglich gehalten zu werden, so dass die Chassishalterung und die Kabinenhalterung relativ zueinander bewegbar sind, wobei die Chassishalterung derart einstückig ausgeformt ist, dass auftreffender Schmutz abgestreift wird.

Die Chassishalterung weist eine Sickenausformung oder dergleichen auf, um den Übergangswinkel zwischen einem mittleren Bereich und einem oberen Bereich zu verändern, so dass eine Abschrägung geschaffen wird, an der Schmutzpartikel in Richtung der Schwerkraft abgelenkt werden. Somit wird ein Anlagern von Schmutzpartikeln verhindert oder verringert. Gleichzeitig wird der Grad der Selbstreinigung erhöht, im Fall von Regen oder bei der Fahrzeugwartung, so dass der Wartungsaufwand verringert wird. Durch die Vermeidung von Schmutzansammlungen wird die Funktionsweise der Kabinenlagerung sichergestellt, wie auch die Vermeidung von auftretenden Geräuschen, die durch ein Anhaften von Schmutzpartikeln entstehen. Die einstückige Ausbildung der Chassishalterung vermindert die Teileanzahl und den Herstellungsaufwand.

In einer Weiterbildung kann die Ausformung in einem Bereich zwischen dem mittleren Bereich und dem unteren Endbereich vorgesehen sein.

Gerade in diesem Übergang zwischen dem mittleren und unteren Bereich findet die größte Schmutzansammlung statt, da es sich in der Einbaulage um eine horizontale Fläche handelt. Hierbei kann gezielt die Ansammlung verhindert oder reduziert werden.

In einer Ausführung kann die Ausformung auf einer Oberseite der Chassishalterung vorgesehen sein.

Die Auswölbung in Richtung der Oberseite der Chassishalterung in der Einbaulage reduziert in dieser Region den üblichen Übergangswinkel von 90 Grad. Damit wird die großflächige Anlagerung von Schmutzpartikeln verhindert und die Reinigung durch Regen oder bei der Wartung mittels Hochdruckreiniger oder dergleichen verbessert.

Bei einer Weiterbildung kann zwischen der oberen Lagerplatte und der Chassisplatte ein hydraulischer Aktuator vorgesehen sein.

Der hydraulische Aktuator ermöglicht die aktive Kabinenfederung im Fahrzeug, sowie eine Dämpfung von Anregungen durch das Fahrzeugchassis. Mit Hilfe der Daten eines Lage- oder Positionssensors kann die aktive Kabinenfederung den Bedienkomfort und die Sicherheit bei der Fahrzeugsteuerung erhöhen.

Bei einer weiteren Ausbildung kann am oberen Endbereich der Chassishalterung ein Positionssensor vorgesehen sein, der mit einem Gestänge zur Führung der oberen und unteren Lagerplatte zusammenwirkt.

Durch den Positionssensor, der mit dem Gestänge zusammenwirkt, das eine Lagerung zwischen der unteren und der oberen Lagerplatte darstellt, kann der vertikale Abstand zwischen der oberen und der unteren Lagerplatte erfasst werden. Der Positionssensor kann dabei ein Winkelsensor oder ein Abstandssensor sein, solange ein Abstand aus den Messdaten errechnet werden kann. Mit Hilfe des errechneten Abstands kann eine aktive Kabinenfederung realisiert werden. Diese steuert aktiv vorhandene Hydraulikaktuatoren an, so dass eine Regelung erfolgt. Weiterhin kann ein sicherheitsrelevanter Zustand erfasst werden, so dass auch in diesem Fall die Hydraulikaktuatoren aktiv in eine gesonderte Position gefahren werden können, die eine größtmögliche Sicherheit für die Bedienperson gewährleistet.

Die Erfindung betrifft auch ein Kabinenlagerungssystem aufweisend wenigstens zwei Kabinenlagerungen nach den vorangehenden Ausführungen, wobei zwischen der Kabinenplatte einer Kabinenlagerung und der Chassishalterung der weiteren Kabinenlagerung ein Panhardstab beweglich gehalten ist.

Die Erfindung und Weiterbildungen werden anhand der Figuren erläutert. Dabei zeigt
Figur 1 eine Detailansicht einer Ausführung;
Figur 2 eine Ausführung in einem eingebauten Zustand in einem Fahrzeug;
Figur 3 eine weitere Ausführung in eingebautem Zustand;
Figur 4 eine Ausführung an einem Achsenmodul eines Fahrzeugs.

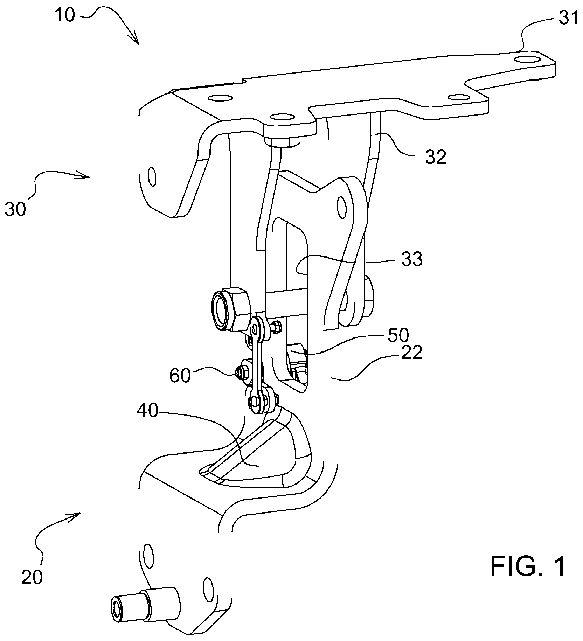

In Fig. 1 ist die Kabinenlagerung 10in einer isometrischen Ansicht dargestellt. Die Kabinenlagerung 10 weist dabei eine zweiteilige Form auf. Der untere Teil stellt dabei die Chassishalterung 20 dar, der obere Teil die Kabinenhalterung 30. Die Chassishalterung 20 beinhaltet eine Chassisplatte 21, die dazu vorgesehen ist, auf einem Teil des Fahrzeugs, bevorzugt ein Bestandteil des Chassis befestigt zu werden, mittels Verschraubung oder Verschweißung. Die Chassisplatte 21 weist einen unteren Bereich zur Befestigung an einem Fahrzeug, einen mittleren Bereich mit einer horizontalen Erstreckung und einen oberen Bereich auf, zur beweglichen Befestigung an der oberen Lagerplatte 32 der Kabinenhalterung 30.

Der obere Bereich der Chassisplatte 21 weist in der Mitte eine Öffnung 33 oder Ausnehmung auf, die dazu dient, einen Teil der oberen Lagerplatte 32 aufzunehmen. Die Öffnung 33 kann dabei gefräst, gebohrt oder gestanzt sein.

Die Kabinenhalterung 30 weist eine Kabinenplatte 31 auf, die dazu ausgebildet ist, an einem Bestandteil der Kabine angebracht zu werden. Hierzu kann die Kabinenplatte 31 Bohrungen für Schrauben aufweisen, jedoch kann diese auch alternativ verschweißt werden. An der Kabinenplatte 31 ist eine obere Lagerplatte 32 in einem mittleren Bereich der Kabinenplatte 31 vorwiegend senkrecht fest verbunden. Die obere Lageplatte 32 weist hierzu zwei zueinander parallele Stege auf, die in einem festen Abstand an der Kabinenplatte 31 befestigt sind und zwei freie Enden aufweisen. In einem Endbereich der oberen Lagerplatte 32 sind die freien Enden durch einen Bolzen, eine Schraube oder einen Metallstab miteinander verbunden. Dabei sitzt der Bolzen gleichzeitig innerhalb der Öffnung 33 der Chassisplatte 21 und sichert eine bewegliche Verbindung der mit der oberen Lagerplatte 32, somit auch der Chassishalterung 20 mit der Kabinenhalterung 30. Durch die geometrische Höhe und Breite der Öffnung 33 ist die relative Beweglichkeit der Kabinenhalterung 30 und der Chassishalterung 20 festgelegt.

Die Chassisplatte 21 weist an einem Übergang von dem unteren Bereich zum mittleren Bereich in Einbaulage eine Ausformung 40 auf, die eine Verringerung des Übergangswinkels bewirkt. Die Gestalt der Ausformung 40 ist als Sicke oder Auswölbung im Biegeradius zwischen dem oberen und dem mittleren Bereich geformt. Die Ausformung 40 kann aber auch eine Verformung über die gesamte Breite der Chassisplatte 21 sein, eine 45 Grad Abwinkelung oder aus mehreren Sicken oder Auswölbungen bestehen. Die Gestalt bewirkt, dass anfallender Schmutz durch die Wirkung der Schwerkraft von Chassisplatte 21 und dem Übergangsradius weg geleitet wird und es an dieser nicht zu einer Schmutzansammlung kommt. Dadurch kann die Ansammlung von Schmutzpartikeln verhindert werden und die Beeinträchtigung der Beweglichkeit von Chassisplatte 21 und oberer Lagerplatte 32 wird sichergestellt. Die Ausformung 40 kann zur horizontalen Ebene einen Winkel von 10 bis 80 Grad einschließen. Zusammen mit der Einwirkung von Wasser, etwa durch Regen oder durch aktives Reinigen des Fahrzeugs kann darüber hinaus die Entfernung von Schmutzpartikeln an der Übergangsstelle vereinfacht werden, wodurch der Wartungsaufwand verringert wird.

Die Chassis- und die Kabinenhalterung 20, 30 sind zusätzlich durch das Gestänge 60 beweglich miteinander verbunden. Das Gestänge 60 dient primär der Erfassung des Abstands der Chassis- und der Kabinenhalterung 20, 30 zueinander. Hierfür ist an der Chassisplatte 21 ein Positionssensor 50 in Form eines Winkelsensors angebracht, der den Winkel der Auslenkung des Gestänges 60 erfasst. Durch eine elektrische Signalausgabe des Sensors 50 mit einer möglichen Berechnung mit Hilfe eines Steuergerätes kann der Abstand berechnet oder direkt gemessen werden. Der Abstand kann für die Steuerung eine aktiven Kabinendämpfung verwendet werden.

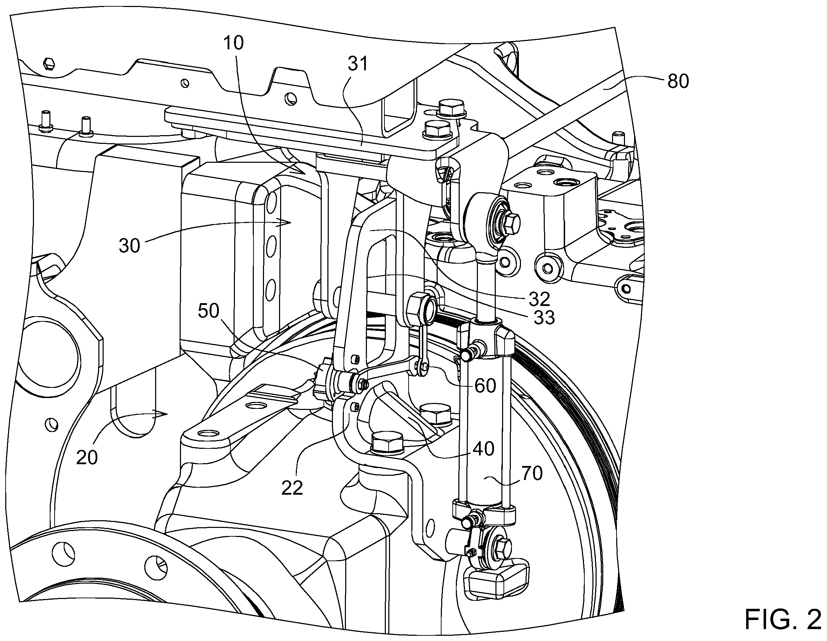

Fig. 2 zeigt die Kabinenlagerung 10 in einer Einbaulage im Fahrzeug. Mit der Chassishalterung 20 ist die Kabinenlagerung 10 an einem Chassisbereich des Fahrzeugs angebracht. Dies kann mittels Schrauben, Nieten, Verschweißen oder dergleichen erfolgen. Mit der Kabinenhalterung 30 und der Kabinenplatte 31 ist die Kabinenlagerung 10 an einer Unterseite der Kabine befestigt. Die Verbindung kann gleichfalls per Verschraubung, Nieten, Verschweißen hergestellt sein. An einer Seite der Kabinenlagerung 10 ist ein hydraulischer Aktuator 70 angebracht. Dieser dient der aktiven Verstellung der Kabinenlagerung 10, so dass der Abstand zwischen der Kabinen- und der Chassishalterung 20 eingestellt werden kann, oder eine aktive Dämpfung der Kabine ermöglicht ist. Der hydraulische Aktor ist an der Chassishalterung 20 und an der Kabinenhalterung 30 befestigt.

In der Anwendung bewegt sich die Kabine unterschiedlich zum Fahrzeugchassis. Diese Bewegung resultiert in einer relativen Bewegung der oberen Lagerplatte 32 und der Chassisplatte 21. Mittels des Gestänges 60 und des Positionssensors 50 kann diese Bewegung der erfasst werden und daraus eine aktive Ansteuerung des hydraulischen Aktuator 70s erfolgen.

Die obere Lagerplatte 32 ist mit der Chassisplatte 21 durch einen Steg verbunden, der zwischen beiden Enden der oberen Lagerplatte 32 angebracht ist. Es ist ebenfalls möglich, dass nur die Chassisplatte 21 zwei freie Enden aufweist. Im Falle eines Fahrzeugüberschlages oder einer starken Krafteinwirkung auf die Kabine, erhält die obere Lagerplatte 32 weiterhin die Verbindung der Kabine mit dem Fahrzeug, so dass ein Überrollen oder Loslösen ausgeschlossen wird.

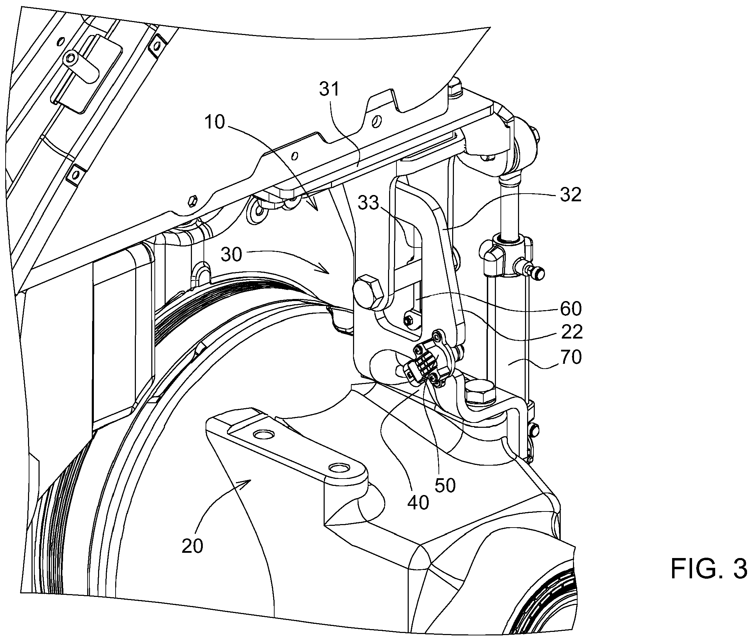

Fig. 3 zeigt eine weitere Ansicht der Kabinenlagerung 10. Die Ausformung 40 ist hier in einer weiteren Seitenansicht dargestellt. Die Höhe der Ausformung 40 kann variabel festgelegt werden, wodurch sich der Winkel, der zwischen der Oberseite der Ausformung 40 und der Horizontalen in der Einbaulage verändern kann.

Der Positionssensor 50, der an der Chassisplatte 21 angebracht ist, ist mit einer nicht dargestellten Steuerung verbunden. Mittels der Steuerung kann das Bewegungsverhalten der Kabine erfasst und berechnet werden, so dass eine aktive Ansteuerung des Hydraulikaktuators 70 erfolgen kann. Der Sensor 50 kann an der Chassisplatte 21 vorgesehen sein. Falls die Einbausituation es erlaubt, kann dieser auch an der oberen Lagerplatte 32 vorgesehen sein. Der Sensor 50 kann auch ein linearer Positionssensor sein. Alternativ kann der Hydraulikaktuator 70 über eine Positionsmessung verfügen, so dass ein zusätzlicher Positionssensor 50 entfallen kann.

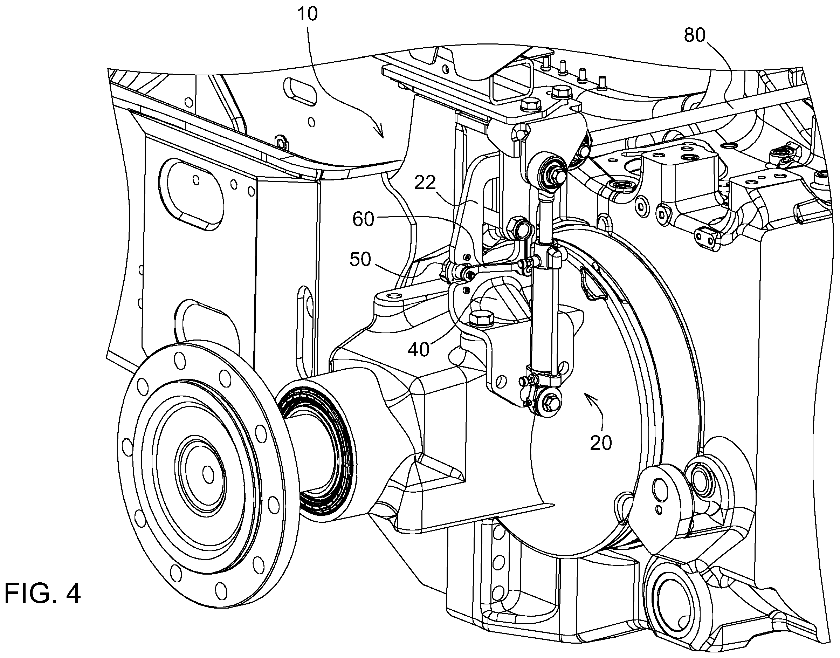

Figur 4 zeigt die Kabinenlagerung 10, die an einem Abschnitt des Achsgehäuses eines Fahrzeugs befestigt ist. Zusätzlich zu den voran beschriebenen Ausführungen weist die Kabinenlagerung 10 einen Panhardstab 80 auf, der eine Baugruppe der Kabinenlagerung 10 mit einer weiteren auf der anderen Kabinenseite verbindet. Der Panhardstab 80 sorgt für die Begrenzung der Freiheitsgrade und verhindert ein seitliches Ausweichen der Kabinenkonstruktion, die an der Kabinenplatte 31 befestigt ist. Hierdurch kann die erfindungsgemäße Kabinenlagerung 10 als Kabinenlagerungssystem in ein Fahrzeug integriert werden. Das System ist an beliebige Kabinenabmessungen anpassbar und ermöglicht eine Verwendung in einem breiten Fahrzeugbereich für unterschiedliche Arbeitsaufgaben.

Das Kabinenlagerungssystem kann wenigstens einen Positionssensor 50 auf einer Kabinenlagerungsseite aufweisen, jedoch ist auch die beidseitige Anbringung des Positionssensor 50 möglich, so dass eine ungleiche Höhe in beiden Seiten der Kabinenlagerung 10 erkannt werden kann.

Besonders im Bereich der Achsen von Fahrzeugen findet ein starker Schmutzeintrag und Aufbau statt. Aufgrund der Kabinenlagerung 10 wird im kritischen Bereich der zueinander beweglichen Bauteile der Schmutzaufbau verhindert. Üblicherweise kann der Schmutzeintrag zu einem Verklemmen der beweglichen Teile, insbesondere der Kabinenlagerung 10 führen, wodurch diese nicht mehr oder nur noch eingeschränkt die Funktion verrichten kann. Darüber hinaus entstehen bei der Bewegung als störend empfundene Geräusche. Durch die erfindungsgemäße Kabinenlagerung 10 und das -system wird die einwandfreie Funktion sichergestellt.

## Patentansprüche

1. Kabinenlagerung aufweisend
eine Chassishalterung (20), aufweisend
eine Chassisplatte (22) mit einem mittleren Bereich, dazu ausgelegt, an einem Chassis eines Fahrzeugs befestigt zu werden,
einem unteren Endbereich, dazu ausgelegt, ein Federungselement zu befestigen, einem oberen Endbereich mit einer Öffnung (33), ausgelegt zum Verbinden mit einer oberen Lagerplatte (32),
eine Kabinenhalterung (30), aufweisend
eine Kabinenplatte (31), ausgelegt zum Befestigen an einer Fahrzeugkabine,
eine an der Kabinenplatte (31) befestigte obere Lagerplatte (32) mit einer U-förmigen Struktur, ausgelegt, um in der Öffnung (33) der Chassisplatte (22) beweglich gehalten zu werden,
so dass die Chassishalterung (20) und die Kabinenhalterung (30) relativ zueinander bewegbar sind,
**dadurch gekennzeichnet, dass** die Chassisplatte (22) einstückig an einem Übergang vom mittleren Bereich zum oberen Endbereich eine Ausformung (40) derart aufweist, dass diese eine Verringerung des Übergangswinkels zwischen den beiden Bereichen bewirkt, sodass eine Abschrägung geschaffen wird, an der Schmutzpartikel in Richtung der Schwerkraft abgelenkt werden.

2. Kabinenlagerung nach Anspruch 1, **dadurch gekennzeichnet, dass** die Ausformung (40) auf einer Oberseite der Chassishalterung (20) vorgesehen ist.

3. Kabinenlagerung nach einem der vorangehenden Ansprüche, **dadurch gekennzeichnet, dass** zwischen der oberen Lagerplatte (32) und der Chassisplatte (22) ein hydraulischer Aktuator (70) vorgesehen ist.

4. Kabinenlagerung nach einem der vorangehenden Ansprüche, **dadurch gekennzeichnet, dass** am oberen Endbereich der Chassishalterung (20) ein Positionssensor (50) vorgesehen ist, der mit einem Gestänge (60) zur Führung der oberen und unteren Lagerplatte (32) zusammenwirkt.

5. Kabinenlagerungssystem aufweisend wenigstens zwei Kabinenlagerungen (10) nach Anspruch 1 bis 5, wobei zwischen der Kabinenplatte (31) einer Kabinenlagerung (10) und der Chassishalterung (20) der weiteren Kabinenlagerung (10) ein Panhardstab (80) beweglich gehalten ist.

## Claims

1. Cab mounting having
a chassis holder (20) having
a chassis plate (22) having a central region, designed to be fastened to a chassis of a vehicle,
a lower end region, designed to fasten a suspension element,
an upper end region having an opening (33), designed for connecting to an upper bearing plate (32),
a cab holder (30) having
a cab plate (31), designed for fastening to a vehicle cab,
an upper bearing plate (32) which is fastened to the cab plate (31) and has a U-shaped structure, designed in order to be held movably in the opening (33) of the chassis plate (22),
such that the chassis holder (20) and the cab holder (30) are movable relative to each other,
**characterized in that** the chassis plate (22) has a moulding (40) in one piece at a transition from the central region to the upper end region in such a way that said moulding causes a reduction of the transition angle between the two regions, such that a ramp on which dirt particles are deflected in the direction of gravity is created.

2. Cab mounting according to Claim 1, **characterized in that** the moulding (40) is provided on an upper side of the chassis holder (20).

3. Cab mounting according to either of the preceding claims, **characterized in that** a hydraulic actuator (70) is provided between the upper bearing plate (32) and the chassis plate (22).

4. Cab mounting according to one of the preceding claims, **characterized in that** a position sensor (50) which interacts with a linkage (60) for guiding the upper and the lower bearing plate (32) is provided on the upper end region of the chassis holder (20).

5. Cab mounting system having at least two cab mountings (10) according to Claims 1 to 5, wherein a Panhard rod (80) is movably held between the cab plate (31) of one cab mounting (10) and the chassis holder (20) of the further cab mounting (10).

## Revendications

1. Support de cabine présentant
un support de châssis (20) présentant
une plaque de châssis (22) présentant une zone centrale, conçue pour être montée sur un châssis d'un véhicule, une zone d'extrémité inférieure, conçue pour fixer un élément de suspension,
une zone d'extrémité supérieure présentant une ouverture (33) conçue pour la liaison à une plaque support supérieure (32),
un support de cabine (30) présentant
une plaque de cabine (31) conçue pour être fixée à une cabine de véhicule,
une plaque support supérieure (32) fixée à la plaque de cabine (31), présentant une structure en U conçue pour être maintenue mobile dans l'ouverture (33) de la plaque de châssis (22),
de telle sorte que le support de châssis (20) et le support de cabine (30) sont mobiles l'un par rapport à l'autre,
**caractérisé en ce que** la plaque de châssis (22) présente un moulage (40) en une seule pièce au niveau d'une transition de la zone médiane à la zone d'extrémité supérieure de telle manière que ledit moulage provoque une réduction de l'angle de transition entre les deux zones, de telle sorte qu'un chanfrein est créé au niveau duquel les particules de souillure sont déviées dans le sens de la gravité.

2. Support de cabine selon la revendication 1, **caractérisé en ce que** le moulage (40) est prévu sur une face supérieure du support de châssis (20).

3. Support de cabine selon l'une des revendications précédentes, **caractérisé en ce qu'**un actionneur hydraulique (70) est prévu entre la plaque support supérieure (32) et la plaque de châssis (22).

4. Support de cabine selon l'une des revendications précédentes, **caractérisé en ce qu'**un capteur de position (50) est prévu au niveau de la zone d'extrémité supérieure du support de châssis (20), lequel capteur coopère avec une tringlerie (60) pour le guidage de la plaque support supérieure et de la plaque support inférieure (32).

5. Système support de cabine présentant au moins deux supports de cabine (10) selon la revendication 1 à 5, une tige Panhard (80) étant maintenue mobile entre la plaque de cabine (31) d'un support de cabine (10) et le support de châssis (20) de l'autre support de cabine (10).
